## Europäisches Patentamt
## European Patent Office
## Office européen des brevets

(11) Veröffentlichungsnummer: **0 136 622**
**B1**

# (12) EUROPÄISCHE PATENTSCHRIFT

(45) Veröffentlichungstag der Patentschrift:
27.04.88

(51) Int. Cl.⁴: **B 60 T 13/16**

(21) Anmeldenummer: 84111148.7

(22) Anmeldetag: 19.09.84

(54) **Hydraulische Steuereinrichtung.**

(30) Priorität: 05.10.83 DE 3336177

(43) Veröffentlichungstag der Anmeldung:
10.04.85 Patentblatt 85/15

(45) Bekanntmachung des Hinweises auf die Patenterteilung:
27.04.88 Patentblatt 88/17

(84) Benannte Vertragsstaaten:
DE FR GB IT

(56) Entgegenhaltungen:
FR-A-2 113 963
FR-A-2 439 112
FR-A-2 496 577
US-A-3 979 912
US-A-4 007 593

(73) Patentinhaber: **ROBERT BOSCH GMBH, Postfach
50, D-7000 Stuttgart 1 (DE)**

(72) Erfinder: **Sandau, Hartmut, Dipl.- Ing.,
Ludwigsburger Strasse 56, D-7141 Möglingen (DE)**
Erfinder: **Weigle, Dieter, Dipl.- Ing.,
Breitensteinstrasse 6, D-7432 Urach (DE)**

## Beschreibung

### Stand der Technik

Die Erfindung geht aus von einer hydraulischen Steuereinrichtung nach der Gattung des Patentanspruchs. Bei einer derartigen bekannten Einrichtung handelt es sich um ein sogenanntes Stufenschaltventil, bei dem der Bremsdruck durch ein in der Verbindung zum Bremszylinder angeordnetes Rückschlagventil stufenförmig aufgebaut wird (FR-A 2 113 963). Dies kommt dadurch, daß jedesmal, wenn eine Druckstufe erreicht ist, das Rückschlagventil schließt, worauf in Verbindung mit dem Stromregelventil die nächste Druckstufe erzeugt wird. Das hat den Nachteil, daß die Bremsung etwas verzögert erfolgt, also nicht optimal ist. Außerdem besteht vom Stromregelventil dann, wenn nicht gebremst wird, eine ständige Drosselverbindung von der Druckmittelquelle zum Behälter, was Druckmittel- und damit Wirkungsgradverlust bedeutet.

### Aufgabe der Erfindung und Vorteile

Der Erfindung liegt die Aufgabe zugrunde, eine hydraulische Steuereinrichtung nach der Gattung des Hauptanspruchs zu schaffen, die einen verbesserten Bremsbetrieb gewährleistet und die in normalem Betriebszustand, also dann, wenn nicht gebremst wird, keine Druckmittelverluste aufweist. Diese Aufgabe wird erfindungsgemäß durch die im Kennzeichenteil des Patentanspruchs genannten Mittel gelöst. Hierbei handelt es sich um ein sogenanntes Drosselbremsventil, bei dem der Bremsdruck stetig aufgebaut wird. Der Bremsvorgang erfolgt damit völlig ruckfrei, und es ist eine besonders gute Proportionalität zwischen Bremskraft und Bremsdruck am Bremszylinder gewährleistet.

### Zeichnung

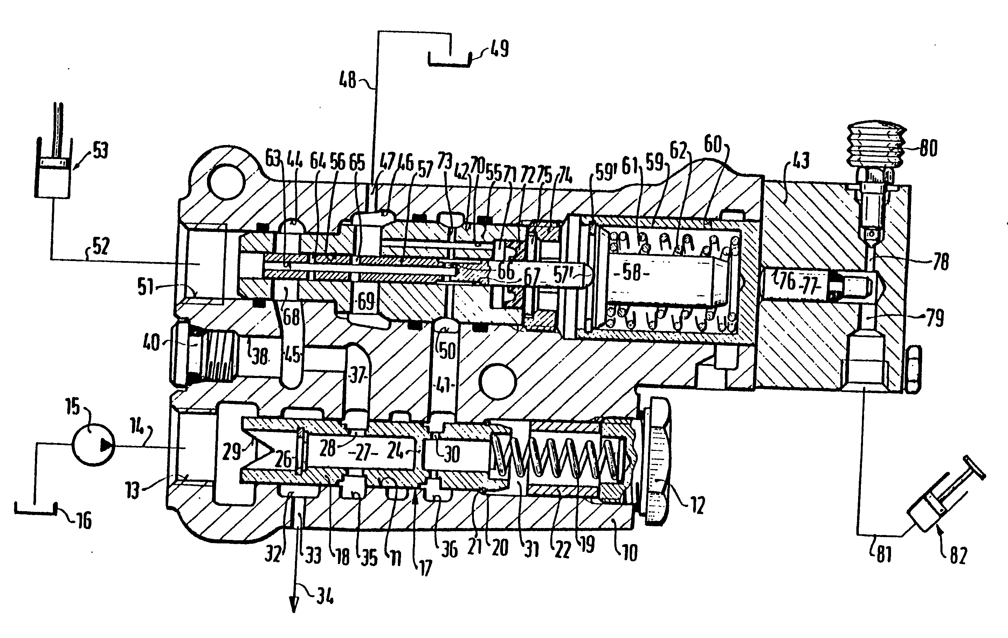

Ein Ausführungsbeispiel der Erfindung ist in der Zeichnung dargestellt und in der nachfolgenden Beschreibung näher erläutert. Diese zeigt einen Längsschnitt durch ein Bremsventil.

### Beschreibung des Ausführungsbeispiels

Die hydraulische Steuereinrichtung weist ein Bremsventil 10 auf, in dessen unterem Teil sich eine durchgehende Längsbohrung befindet. Diese ist auf der einen Seite durch eine Verschlußschraube 12 verschlossen. An der gegenüberliegenden Seite ist eine Einlaßbohrung 13 ausgebildet, an die eine Leitung 14 angeschlossen ist, die von einer aus einem Behälter 16 Druckmittel ansaugenden Pumpe 15 ausgeht. In der Längsbohrung 11 ist ein Stromregelventil 17 angeordnet, dessen Steuerschieber 18 von einer Reglerfeder 19 belastet ist, die ihn, wenn er nicht druckbeaufschlagt ist, mittels eines an seinem Außenumfang angeordneten Sprengrings 20 gegen eine Bohrungsschulter 21 drückt. Im hinteren Teil der Längsbohrung 11 ist eine sich an die Verschlußschraube anlegende Distanzbuchse 22 angeordnet.

Der Steuerschieber 18 ist im wesentlichen hohl ausgebildet, weist aber eine etwa mittige Trennwand 24 auf. Im vorderen Teil des Steuerschiebers befindet sich eine Blende 26, so daß zwischen dieser und der Trennwand 24 ein Raum 27 gebildet ist; in diesen dringt eine Querbohrung 28 ein. An seiner der Einlaßbohrung 13 zugewandten Stirnseite weist der Steuerschieber 18 zwei Dreieckkerben 29 auf. Hinter der Trennwand 24 ist die Wand des Steuerschiebers ebenfalls von einer durchgehenden Querbohrung 30 durchdrungen. Der die, Reglerfeder 19 aufnehmende Raum ist mit 31 bezeichnet.

An der Längsbohrung 11 befinden sich mehrere Ringnuten, nämlich eine erste Ringnut 32, von der eine Bohrung 33 zum äußeren des Gehäuses verläuft und an die eine zu einem Verbraucher führende Leitung 34 angeschlossen ist, eine zweite Ringnut 35 und eine dritte Ringnut 36. Von der zweiten Ringnut 35 führt ein Kanal 37 zu einer parallel zur Längsbohrung 11 verlaufenden Sackbohrung 38. Die Sackbohrung 38 ist durch eine Verschlußschraube 40 nach außen verschlossen. Von der Ringnut 36 führt ein Kanal 41 zu einer parallel zur Längsbohrung 11 verlaufenden Längsbohrung 42, die mehrfach abgestuft ist und deren eines Ende durch ein Gehäuseteil 43 dicht verschlossen ist. An der Längsbohrung 42 sind ebenfalls verschiedene Ringnuten ausgebildet, nämlich eine erste Ringnut 44, von der ein Kanal 45 zur Bohrung 38 führt und eine zweite Ringnut 46, von der eine Bohrung 47 zum äußeren des Gehäuses verläuft und an die eine zu einem Behälter 49 führende Leitung 48 angeschlossen ist. In die dritte Ringnut 50 an der Längsbohrung 42 mündet der von der Längsbohrung 11 ausgehende Kanal 41. Die Längsbohrung 42 weist einen Einlaß 51 auf, von der eine Bremsleitung 52 zu einem Bremszylinder 53 z. B. einer an einem Anhänger angebauten Bremseinrichtung führt.

In der Längsbohrung 42 ist fest ein Gehäuseeinsatz 55 angeordnet, der eine durchgehende, im Durchmesser konstante Schieberbohrung 56 aufweist, in welcher ein Steuerschieber 57 gleitend geführt ist. Der Steuerschieber liegt mit seinem dem Einlaß 51 abgewandten Ende 57' an einem Federwiderlager 58 an, das in einen Kolben 59 angeordnet ist, der im hinteren, erweiterten Bohrungsteil 60 der Längsbohrung 42 gleitend geführt ist. Im Kolben 59 sind zwei Druckfedern 61, 62 angeordnet, die sich einerseits am Boden des Kolbens abstützen, andererseits am Federwiderlager, das sie gegen einen im Kolben 59 angeordneten Anschlag 59' drücken.

Im Steuerschieber 57 ist eine als Sackbohrung ausgebildete Längsbohrung 63 ausgebilet. Diese ist von drei Querbohrungen 64 bis 66 durchdrungen. Die Querbohrung 66 mündet in eine am Außenumfang des Steuerschiebers 57 ausgebildete Ringnut 67. Im Gehäuseeinsatz 55 sind zwei durchgehenge, die Schieberbohrung 56 schneidende Querbohrungen 68, 69 ausgebildet, von denen die erstere Verbindung zum Kanal 45, die zweite Verbindung zur Ringnut 46 hat. Von der Querbohrung 69 führt eine parallel zur Schieberbohrung 56 verlaufende Bohrung 70 zu einem am Ende des Gehäuseeinsatzes ausgebildeten Raum 71, in dem ein Dichtkörper 72 angeordnet ist, durch welchen der hintere Teil des Steuerschiebers 57 dichtend hindurchtritt. Der Gehäuseeinsatz wird durch eine Ringschraube 74 unter Zwischenlage einer Scheibe 75 festgehalten, an der sich auch die Dichtung 72 mit ihrem Rücken abstützt. Im Gehäuseeinsatz 55 ist ferner noch eine durchgehende Querbohrung 73 ausgebildet, die die Schieberbohrung 56 schneidet, die von der Ringnut 50 ausgeht und Verbindung zur Ringnut 67 am Steuerschieber 57 hat. Die Querbohrung 73 um 90° versetzt gezeichnet.

Im Gehäuseteil 43 ist eine achsgleich zur Schiebebohrung 56 verlaufende Sackbohrung 76 ausgebildet, in der ein Kölbchen 77 dicht gleitend geführt ist. In das Ende der Sackbohrung 76 münden zwei Bohrungen 78, 79, wobei an die Bohrung 78 eine Entlüftungsvorrichtung 80 angeschlossen ist, an die Bohrung 79 eine Leitung 81, die zu einem hydraulischen Bremskraftgeber 82 führt.

Die Steuereinrichtung arbeitet wie folgt: Wird nicht gebremst, also der Bremskraftgeber 82 nicht betätigt, dann befindet sich der Steuerschieber 57 in der gezeichneten Stellung. Das von der Pumpe 15 geförderte Druckmittel staut sich an der Blende 26, und die sich hierdurch ergebende Druckdifferenz verschiebt den Steuerschieber 18 entgegen der Kraft der Reglerfeder 19 nach rechts. Die Dreieckkerben 29 stellen Verbindung von der Einlaßbohrung 13 zur Ringnut 32 her und das geförderte Druckmittel fließt über die Leitung 34 zu einem Verbraucher. Das im Raum 31 befindliche Druckmittel fließt dann über die Querbohrungen 30 in den Kanal 41 und gelangt in die Ringnut 50, von der es über die Querbohrung 73 in die Ringnut 67 am Steuerschieber 57 gelangt, von dort in die Querbohrungen 66 und in die Längsbohrung 63. Von dieser fließt es über die Querbohrungen 65 in die Querbohrung 69 und gelangt dann über die Leitung 48 in den Behälter (1. Verbindung). Ist die durch den Förderstrom erzeugte Kraft auf den Steuerschieber 18 größer als die Kraft der Regelfeder 19, so wird er gegen den Rand der Distanzbuchse 22 gedrückt. Der Steuerschieber 57 befindet sich in der gezeichneten Stellung. Die Bremsleitung 52 steht dabei ebenfalls mit dem Behälter in Verbindung (2. Verbindung). Der Raum 27 innerhalb des Steuerschiebers hat über die Querbohrungen 28 Verbindung zum Kanal 37 und zum Kanal 45 (3. Verbindung).

Wird der Bremskraftgeber 82 betätigt, so baut sich in der Leitung 81 und der Bohrung 76 Druck auf. Dieser wirkt auf das Kölbchen 77 und dieses wiederum auf den Kolben 59 und schiebt ihn nach links. Die im Kolben 59 angeordneten Federn 61, 62 drücken den Steuerschieber 57 nun ebenfalls nach links. Dadurch wird die Leitung 52, die zuvor über die Längsbohrung 63 und die Querbohrung 65 im Steuerschieber 57 mit dem Behälter 49 in Verbindung stand, von diesem getrennt da die Querbohrungen 65 nun verschlossen werden. Jetzt kommen die Querbohrungen 64 mit der Querbohrung 68 und dem Kanal 45 in Verbindung und damit auch mit dem Kanal 37. Verbindung wird jetzt auch hergestellt vom Raum 27 über die Kanäle 37, 45, die Längsbohrung 63 im Steuerschieber 57, die Querbohrung 73 und den Kanal 41 sowie die Querbohrung 30 im Steuerschieber zum Raum 31 (4. Verbindung). Dort baut sich derselbe Druck auf wie im Raum 27, so daß die Reglerfeder 19 den Steuerschieber 18 nach links verschiebt. Dadurch wird die 4. Verbindung von den Dreieckkerben 29 zur Leitung 34 nach und nach zugesteuert, so daß sich ein höherer Druck aufbaut, der über die Kanäle 37 bis 45 und die Längsbohrung 63 im Schieber auch in die Bremsleitung 52 fortgepflanzt wird. Der Bremszylinder 53 wird nun betätigt.

Ist der vom Fahrer gewünschte Bremsdruck erreicht, dann wird der Steuerschieber 57 aufgrund seiner dem Einlaß 51 zugewandten druckbeaufschlagten Fläche entgegen der Kraft des Kolbens 59 nach rechts geschoben, bis die Querbohrungen 64 durch die Ringnut 44 fast verschlossen werden, und zwar deshalb, da immer eine gewisse Leckmenge ausgeglichen werden muß. Der von der Pumpe 15 erzeugte Druck bleibt jetzt auf der vom Fahrer vorgegebenen Bremsdruckhöhe erhalten.

Wird der Bremskraftgeber 82 nicht mehr betätigt, so bricht der Druck in den Bohrungen 79, 76 zusammen, und der Steuerschieber 57 gelangt wieder in seine zuvor eingenommene, in der Zeichnung dargestellten Lage. Daraufhin kann auch der Steuerschieber 18 des Stromregelventils 17 seine ursprüngliche Position wieder einnehmen, so daß nun das gesamte Druckmittel auch wieder über die Leitung 34 zum Verbraucher strömt.

Die beschriebene Steuereinrichtung zeigt ein gutes proportinales Verhalten von Bremskraft zu vorgegebener Kraft am Bremskraftgeber 82.

## Patentanspruch

Hydraulische Steuereinrichtung mit einem Bremsventil (10) zum Steuern des von einer

Pumpe (15) geförderten Druckmittelstroms über ein von diesem durchströmtes Stromregelventil (17) zu einem ersten Verbraucher (34) und über ein diesem Stromregelventil (17) nachgeschalteten, von einem Bremskraftgeber (Bremspedal 82) aktivierten Steuerschieber (57) zu einem Bremszylinder (53), mit einer im Schieber (18) des Stromregelventils angeordneten Drossel (26) und mit einer auf den Schieber (18) einwirkenden, in einem von der Drossel (26) getrennten ersten Raum (31) angeordneten Reglerfeder (19), welche der Druckdifferenz an der Drossel (26) entgegenwirkt, von welchem ersten Raum (31) eine erste Verbindung zu einem Behäler (49) besteht, wobei über eine im Steuerschieber (57) ausgebildete Längsbohrung (63) und eine erste, die Längsbohrung schneidende Querbohrung (65) eine zweite Verbindung (52, 63, 65, 47) vom Bremszylinder (53) zum Behälter (49) herstellbar ist, wobei weiterhin eine dritte Verbindung zwischen einem unmittelbar hinter der Drossel (26) liegenden, zweiten Raum (27) des Schiebers (18) und dem Bremszylinder (53) herstellbar ist, und wobei schließlich eine vierte Verbindung zwischen dem ersten (31) und dem zweiten Raum (27) herstellbar ist, gekennzeichnet durch folgende Merkmale:

a) der die Reglerfeder (19) aufnehmende, erste Raum (31) ist von dem zweiten Raum (27) durch eine geschlossene Trennwand (24) im Schieber (18) abgetrennt;

b) die erste Verbindung (30, 41, 50, 73, 67, 66, 63, 65, 48) zwischen dem ersten Raum (31) und dem Behälter (49) ist über die Längsbohrung (63) und eine zweite Querbohrung (66) im Steuerschieber (57) herstellbar;

c) die dritte Verbindung (27, 35, 45, 44, 68, 64, 63, 52) zwischen Stromregelventil (17) und Bremszylinder (53) ist über die Längsbohrung (69) und eine dritte Querbohrung (64) im Steuerschieber (57) herstellbar;

d) die vierte Verbindung (27, 37, 45, 44, 68, 64, 63, 66, 73, 50, 41, 30) zwischen dem ersten (31) und zweiten Raum (27) ist ebenfalls über die Längsbohrung (63) sowie über die dritte (64) und die zweite Querbohrung (66) des Steuerschiebers (57) herstellbar.

## Claim

Hydraulic control device with a brake valve (10) for controlling the flow of pressurized medium delivered by a pump (15), through a flow regulating valve (17) passing said medium, to a first consumer (34) and through a control slide (57) connected downstream of said flow regulating valve (17) and actuated by a brake force transducer (brake pedal 82) to a brake cylinder (53), having a throttle (26) arranged in the slide (18) of the flow regulating valve and having a regulator spring (19) arranged in a first chamber (31) separated by the throttle (26) and influencing the slide (18), which counteracts the pressure differential at the throttle (26), from which first chamber (31) a first connection is present with a tank (49), whilst a second connection (52, 63, 65, 47) can be made from the brake cylinder (53) to the tank (49) through a longitudinal bore (63) constructed in the control slide (57) and a first transverse bore (65) intersecting the longitudinal bore, whilst furthermore a third connection can be made between a second chamber (27) of the slide (18) located immediately downstream of the throttle (26) and the brake cylinder (53), and whilst finally a fourth connection can be made between the first (31) and the second chamber (27), characterized by the following features:

a) the first chamber (31) which accommodates the regulator spring (19) is separated from the second chamber (27) by a closed partition (24) in the slide (18);

b) the first connection (30, 41, 50, 73, 67, 66, 63, 65, 48) between the first chamber (31) and the tank (49) can be made through the longitudinal bore (63) and the second transverse bore (66) in the control slide (57);

c) the third connection (27, 38, 45, 44, 68, 64, 63, 52) between flow regulating valve (17) and brake cylinder (53) can be made through the longitudinal bore (69) and a third transverse bore (64) in the control slide (57);

d) the fourth connection (27, 37, 45, 44, 68, 64, 63, 66, 73, 50, 41, 30) between the first (31) and second chamber (27) can likewise be made through the longitudinal bore (63) and through the third (64) and the second transverse bore (66) of the control slide (57).

## Revendication

Dispositif de commande hydraulique, avec une soupape de freinage (10) pour commander le débit de fluide à pression véhiculé par une pompe (15), par une soupape de régulation de débit (17) parcourue par celui-ci, vers un premier utilisateur (34) et par un tiroir de commande (57), branché en aval de cette soupape de régulation de débit (17), activé par un transmetteur d'effort de freinage (pédale de frein 82), avec un laminage (26) disposé dans le tiroir (18) de la soupape de régulation de débit et avec ressort de régulateur (19), agissant sur le tiroir (18), dans une première enceinte (31) séparée de l'étranglement (26), lequel ressort agit contre la différence de pression au laminage (26), de laquelle première enceinte (31) existe une première liaison avec un reservoir (49), une deuxième liaison (52, 63, 65, 47) du cylindre de frein (53) vers le réservoir (49) étant à cette occasion réalisable par un alésage longitudinal (63) conformé dans le tiroir de commande (57), une troisième liaison étant en outre, réalisée entre une deuxième enceinte (27) du tiroir (18), situé immédiatement derrière l'étranglement (26)

et le cylindre de frein (53), une quatrième liaison étant finalement réalisée entre la première enceinte (31) et la deuxième enceinte (27), caractérisé en ce que:

a) la première enceinte (31) recevant le ressort de régulation (19) est séparée de la deuxième enceinte (27) paar une paroi de séparation (24) fermée, dans le tiroir (18),

b) la première liaison (30, 41, 50, 73, 67, 66, 63, 65, 48) entre la première enceinte (31) et le réservoir (49) est réalisée par l'alésage longitudinal (63) et un deuxième alésage tranversal (66) dans le tiroir de commande (57);

c) la troisième liaison (27, 38, 45, 44, 68, 64, 63, 52) entre soupape de régulation de d ébit (17) et cylindre de frein (53) est réalisée par l'alésage longitudinal (69) et un troisième alésage transversal (64) dans le tiroir de commande (57),

d) la quatrième liaison (27, 37, 45, 44, 68, 64, 63, 66, 73, 50, 41, 30) entre la première enceinte (31) et la deuxième enceinte (27) est également réalisée par l'alésage longitudinal (63) ainsi que par le troisième (64) et le deuxième alésage transversal (66) du tiroir de commande (57).

0 136 622